# EUROPÄISCHE PATENTSCHRIFT

(11) **EP 3 112 231 B1**
(45) Veröffentlichungstag und Bekanntmachung des Hinweises auf die Patenterteilung: **02.12.2020**
(21) Anmeldenummer: 16001167.2
(22) Anmeldetag: 21.05.2016
(51) Int. Cl.: B60T 13/22, B60T 13/38

(54) **FESTSTELLBREMSMODUL, BREMSANLAGE UND FAHRZEUG DAMIT SOWIE VERFAHREN ZUM BETREIBEN EINER FESTSTELLBREMSEINRICHTUNG MIT EINEM SOLCHEN MODUL**
PARKING BRAKE MODULE, BRAKE SYSTEM AND VEHICLE USING SAME AND METHOD FOR OPERATING A PARKING BRAKE HAVING SUCH A MODULE
MODULE DE FREIN DE STATIONNEMENT, INSTALLATION DE FREINAGE ET VEHICULE AINSI EQUIPE ET PROCEDE DE FONCTIONNEMENT D'UN DISPOSITIF DE FREIN DE STATIONNEMENT AVEC UN TEL MODULE

(30) Priorität: 29.06.2015 DE 102015008379
(43) Veröffentlichungstag der Anmeldung: 04.01.2017
(73) Patentinhaber: WABCO GmbH, 30432 Hannover (DE)
(72) Erfinder: Lichtenberg, Wolfgang, 30457 Hannover (DE); Schappler, Hartmut, 30455 Hannover (DE)

(56) Entgegenhaltungen:
- EP-A1- 2 615 003
- DE-A1- 10 336 611
- DE-A1-102010 011 978
- DE-A1-102014 107 218

## Beschreibung

Die Erfindung betrifft ein Feststellbremsmodul einer Feststellbremseinrichtung gemäß dem Oberbegriff von Anspruch 1, eine Bremsanlage mit einer Feststellbremseinrichtung, ein Fahrzeug, insbesondere Nutzfahrzeug, sowie ein Verfahren zum Betreiben einer Feststellbremseinrichtung gemäß dem Oberbegriff von Anspruch 11.

Bekannte Bremsanlagen für ein Fahrzeug, insbesondere Nutzfahrzeug, weisen eine Betriebsbremseinrichtung zur Breitstellung einer Betriebsbremsfunktion sowie eine Feststellbremseinrichtung zur Bereitstellung einer Feststellbremsfunktion auf.

Aus DE 103 36 611 A1 ist eine druckluftbetriebene Bremsanlage bekannt, bei der mittels der Betriebsbremsfunktion Membranteile von Bremszylindern mit einem Betriebsbremsdruck belüftbar sind, wobei dieser Betriebsbremsdruck entsprechend einem Fahrerwunsch aussteuerbar ist. Die Feststellbremsfunktion hingegen erfordert eine Entlüftung von Federspeicherteilen von Bremszylindern, insbesondere von kombinierten Federspeicher-/Membranzylindern, wobei die Entlüftung für einen aussteuerbaren Feststellbremsdruck sorgt.

Dabei unterscheidet sich ein kombinierter Federspeicher-/Membranzylinder dadurch von einem einfachen Betriebszylinder, dass der Bremszylinder lediglich zum Betätigen der Betriebsbremse dient. Der kombinierte Federspeicher-/Membranzylinder weist neben einen Membranteil für die Betriebsbremse einen Federspeicherteil für die Feststellbremse auf. Ist der Federspeicherteil entlüftet, legt eine Speicherfeder die Feststellbremse ein, wodurch das Fahrzeug auch im drucklosen Zustand sicher gehalten wird. Zum Lösen der Feststellbremse wird der Federspeicherteil belüftet und die Bremse gelöst. Das Fahrzeug kann dann über die Betriebsbremse eingebremst werden.

Das Aussteuern der Feststellbremse erfolgt mittels eines Feststellbremsmoduls, welches elektromagnetisch schaltbare Ventile aufweist, die im Falle einer gelösten Feststellbremse bevorzugt unbestromt sind, um einen minimalen Energieverbrauch und eine minimale Wärmeabgabe zu erreichen. Zum Einlegen der Feststellbremse wird mindestens ein elektromagnetisch schaltbares Ventil zum Umschalten seines Schaltzustandes bestromt. Dazu weist das Feststellbremsmodul eine elektronische Steuereinrichtung auf.

Aus Sicherheitsgründen ist es wünschenswert, die Feststellbremsfunktion auch bei einem Ausfall der elektronischen Komponenten, wie beispielsweise Steuereinrichtung, Batterie, Spannungsversorgung und/oder Magnetventile, dennoch einlegen zu können. Dazu weist die Feststellbremseinrichtung eine Noteinbremsfunktion auf.

In DE 103 36 611 A1 ist eine Noteinbremsfunktion gezeigt, welche durch ein in das Feststellbremsmodul integriertes Handbetätigungsventil ermöglicht wird. Zum Betätigen dieser Noteinbremsfunktion muss der Fahrer jedoch das Fahrzeug verlassen und das Handbetätigungsventil an dem Feststellbremsmodul betätigen.

Der Erfindung liegt daher die Aufgabe zugrunde, eine Feststellbremseinrichtung mit einer Noteinbremsfunktion sowie ein Verfahren zum Betreiben einer Feststellbremseinrichtung mit einer Noteinbremsfunktion zu schaffen, wobei die Noteinbremsfunktion dahingehend verbessert ist, dass ein komfortables Einlegen der Feststellbremsfunktion vom Fahrer aus der Fahrzeugkabine aus ermöglicht wird.

Die Erfindung löst diese Aufgabe mit einem Feststellbremsmodul mit den Merkmalen gemäß Anspruch 1, mit einer Bremsanlage mit den Merkmalen gemäß Anspruch 9, mit einem Fahrzeug mit den Merkmalen gemäß Anspruch 10 sowie mit einem Verfahren zum Betreiben einer Feststellbremseinrichtung mit den Merkmalen gemäß Anspruch 11.

Das erfindungsgemäße Feststellbremsmodul einer Feststellbremseinrichtung mit einer Noteinbremsfunktion ist derart ausgestaltet, um mindestens einen Bremsaktuator mittels einer Druckmittelbeaufschlagung zu steuern. Bevorzugt ist ein derartiger Bremsaktuator ein Federspeicherbremszylinder oder ein kombinierter Federspeicher-/Membranbremszylinder einer Bremsanlage eines Fahrzeugs, insbesondere Nutzfahrzeug.

In dem Feststellbremsmodul sind eine elektronische Steuereinrichtung, mindestens ein von der Steuereinrichtung betätigbares Magnetventil sowie ein druckmittelmengenverstärkendes Ventil integriert.

Das druckmittelmengenverstärkende Ventil, nachfolgend auch Relaisventil genannt, stellt Druckmittel in größerer Druckmittelmenge bereit. Mit sehr kleinen Druckmittelmengen, die bevorzugt mittels Magnetventile ausgesteuert und über einen Steuereingang dem Relaisventil zugeführt werden, steuert das Relaisventil sehr große Druckmittelmengen, insbesondere zur Ansteuerung der Bremszylinder, wobei das Relaisventil die großen Druckmittelmengen aus einem Druckmittelvorratsbehälter bzw. Druckspeicher bezieht. Zudem weist das Relaisventil einen Druckmittelausgang auf, über welchen Druckmittel wieder abgelassen werden kann.

Das erfindungsgemäße Feststellbremsmodul weist darüber hinaus einen Druckmitteleingang auf, über den das Feststellbremsmodul mit Druckmittel aus einem Druckmittelvorratsbehälter bzw. Druckspeicher versorgt wird.

Zur Bereitstellung der erfindungsgemäßen Noteinbremsfunktion weist das Feststellbremsmodul ferner ein Doppelabsperrventil, insbesondere ein Select-Low-Ventil, und einen Druckmittelanschluss auf, wobei der Druckmittelanschluss zur Realisierung der Noteinbremsfunktion über zumindest ein Ventil, welches einen Entlüftungsanschluss aufweist, verbindbar ist bzw. verbunden werden kann. Das Doppelabsperrventil ist derart ausgestaltet, um stets den kleineren der an zwei Eingängen anliegenden Drücke über einen Ausgang auszugeben, indem das Doppelabsperrventil derart ausgestaltet ist, dass derjenige Eingang, an welchem der geringere Druck anliegt, mit dem Ausgang des Doppelabsperrventils verbunden ist. Dazu ist der eine Eingang des Doppelabsperrventils mit einem Magnetventilausgang verbunden und der andere Eingang des Doppelabsperrventils mit dem Druckmittelanschluss des Feststellbremsmoduls. Der Ausgang des Doppelabsperrventils ist mit dem Steuereingang des Relaisventils verbunden, falls an dem mit dem Druckmittelanschluss verbundenen Eingang des Doppelabsperrventils ein geringerer Druck anliegt als an dem anderen Eingang des Doppelabsperrventils.

Über den Druckmittelanschluss sind Mittel angeschlossen mit denen die Feststellbremseinrichtung auch im Falle einer Störung, wie z.B. Ausfall der elektronischen Steuereinrichtung, einbremsbar ist. Dadurch weist das erfindungsgemäße Feststellbremsmodul den Vorteil auf, auch bei einer Störung, wie beispielsweise einem Ausfall der Steuereinrichtung, der Batterie, der Spannungsversorgung und/oder der Magnetventile, das Fahrzeug sicher einbremsen zu können. Da die an dem Druckmittelanschluss angeschlossenen Mittel separat zum Feststellbremsmodul angeordnet sind, ist vorteilhafterweise ein besonders komfortables Einbremsen des Fahrzeugs auch bei einer Störung möglich.

Gemäß einer Weiterbildung ist über den Druckmittelanschluss des Feststellbremsmoduls ein 2/2-Wege Ventil, insbesondere ein handbetätigbares 2/2-Wege Ventil, über eine Druckmittelleitung mit dem Feststellbremsmodul verbunden. Das 2/2-Wege Ventil dient dabei vorteilhafterweise als Mittel mit dem die Feststellbremseinrichtung auch im Falle einer Störung, wie z.B. Ausfall der elektronischen Steuereinrichtung, einbremsbar ist. Dazu weist das 2/2-Wege Ventil einen ersten Schaltzustand auf, bei dem die an dem Druckmittelanschluss angeschlossene Druckmittelleitung abgesperrt ist und einen zweiten Schaltzustand, bei dem die an dem Druckmittelanschluss angeschlossene Druckmittelleitung zur Atmosphäre hin geöffnet ist. In diesem zweiten Schaltzustand werden somit über das 2/2-Wege Ventil die Bremsaktuatoren entlüftet und die Feststellbremse des Fahrzeugs eingelegt.

Gemäß einer alternativen Weiterbildung ist über den Druckmittelanschluss des Feststellbremsmoduls ein 3/2-Wege Ventil, insbesondere ein handbetätigbares 3/2-Wege Ventil, über eine Druckmittelleitung mit dem Feststellbremsmodul verbunden, wobei dem 3/2-Wege Ventil über einen Anschluss Vorratsdruckmittel zuführbar ist. Dazu ist das 3/2-Wege Ventil über einen Anschluss mit einem Vorratsdruckbehälter verbunden. Das 3/2-Wege Ventil dient dabei vorteilhafterweise als Mittel mit dem die Feststellbremseinrichtung auch im Falle einer Störung, wie z.B. Ausfall der elektronischen Steuereinrichtung, einbremsbar ist. Dazu weist das 3/2-Wege Ventil einen ersten Schaltzustand auf, bei dem die an dem Druckmittelanschluss angeschlossene Druckmittelleitung mit einem Druckmittelvorratsbehälter bzw. Druckspeicher verbunden ist und einen zweiten Schaltzustand, bei dem die an dem Druckmittelanschluss angeschlossene Druckmittelleitung zur Atmosphäre hin geöffnet ist. In diesem zweiten Schaltzustand werden somit über das 3/2-Wege Ventil die Bremsaktuatoren entlüftet und die Feststellbremse des Fahrzeugs eingelegt.

Eine Weiterbildung der Erfindung sieht vor, das das über den Druckmittelanschluss des Feststellbremsmoduls verbundene Ventil, insbesondere das 2/2-Wege Ventil oder 3/2-Wege Ventil, beabstandet von dem Feststellbremsmodul angeordnet ist. Da das Feststellbremsmodul bevorzugt in Bremsennähe am Fahrzeug verbaut ist, ist somit vorteilhafterweise eine komfortable Noteinbremsfunktion umsetzbar, wenn das für die Noteinbremsfunktion benötigte Ventil beabstandet zum Feststellbremsmodul, insbesondere in der Fahrerkabine des Fahrzeugs, angeordnet ist.

Gemäß einer alternativen Weiterbildung der Erfindung ist über den Druckmittelanschluss des Feststellbremsmoduls eine separate Ventillogik verbunden. Dadurch lassen sich vorteilhafterweise eventuell bestehende Komponenten einer Bremsanlage zur Umsetzung der Noteinbremsfunktion verwenden.

In einer Weiterbildung der Erfindung weist das Doppelabsperrventil ein Federelement auf, mit dem das Doppelabsperrventil derart vorspannbar ist, um eine bevorzugte Durchgangsrichtung des Druckmittels innerhalb des Doppelabsperrventils zu erzeugen. Mittels des Federelementes wird somit ein Hauptdurchgangsrichtung von einem Ausgang eines Magnetventils zu dem Steuereingang des Relaisventils vorgespannt und somit vorteilhafterweise als Grundposition des Doppelabsperrventils gehalten.

Gemäß einer Weiterbildung der Erfindung weist das Doppelabsperrventil einen Hilfsdrucksteuerkanal mit einer Abdüsung auf, wobei die Nennweite der Abdüsung derart bemessen ist, dass der an dem Hilfsdrucksteuerkanal anliegende Druck abfällt für den Fall, dass ein an dem Druckmittelanschluss des Feststellbremsmoduls, welcher über einen der zwei Eingänge des Doppelabsperrventils mit dem Steuereingang des Relaisventils verbunden ist, anliegender Druck ebenfalls abfällt.

In einer Weiterbildung der Erfindung sind der Druckmitteleingang und/oder der Druckmittelanschluss des Feststellbremsmoduls jeweils mit einem, insbesondere feinmaschigen, Partikelfilter versehen. Dadurch wird vorteilhafterweise das Eindringen von Schmutzpartikeln in das Feststellbremsmodul vermieden.

Bei dem erfindungsgemäßen Feststellbremsmodul können mindestens zwei, drei oder mehr der vorstehend beschriebenen Weiterbildungen miteinander kombiniert werden, um im Rahmen der Erfindung sinnvolle Merkmalskombinationen zu erhalten.

Ferner wird die o.g. Aufgabe mittels einer Bremsanlage mit einer Feststellbremseinrichtung gelöst, wobei die Bremsanlage mindestens ein vorstehend beschriebenes Feststellbremsmodul aufweist, mit dem eine Noteinbremsfunktion der Feststellbremseinrichtung bereitstellbar ist.

Die o.g. Aufgabe wird außerdem mittels eines Fahrzeugs, insbesondere Nutzfahrzeug, gelöst, wobei das Fahrzeug mindestens ein vorstehend beschriebenes Feststellbremsmodul und/oder mindestens eine o.g. Bremsanlage aufweist.

Schließlich wird die o.g. Aufgabe mittels eines Verfahrens zum Betreiben einer Feststellbremseinrichtung mit einer Noteinbremsfunktion gelöst, wobei die Noteinbremsfunktion mittels eines Doppelabsperrventils und eines Druckmittelanschlusses des Feststellbremsmoduls bereitgestellt wird.

Das Doppelabsperrventil weist zwei Eingänge und einen Ausgang auf und ist derart ausgestaltet, um den kleineren der an den Eingängen anliegenden Drücke an dem Ausgang des Doppelabsperrventils auszugeben, indem derjenige Eingang, an welchem der geringere Druck anliegt, mit dem Ausgang des Doppelabsperrventils verbunden wird und somit der geringere Druck ausgegeben wird. Da der Ausgang des Doppelabsperrventils mit dem Steuereingang des Relaisventils verbunden ist, wird der an dem Ausgang des Doppelabsperrventils ausgegebene Druck als Steuerdruck dem Relaisventil zugeführt.

Zum Noteinbremsen der Feststellbremseinrichtung wird der Druckmittelanschluss des Feststellbremsmoduls, bevorzugt mittels eines 2/2-Wege Ventils oder 3/2-Wege Ventils, mit der Atmosphäre verbunden und die Bremsaktuatoren über das Relaisventil entlüftet.

Ein derartiges Verfahren zum Betreiben einer Feststellbremseinrichtung ermöglicht vorteilhafterweise ein besonders komfortables Einlegen der Feststellbremse bei einem Ausfall der elektronischen Komponenten der Feststellbremseinrichtung. Bevorzugt ist eine Druckmittelleitung von der Fahrzeugkabine zum Druckmittelanschluss des Feststellbremsmoduls gelegt, über die die Noteinbremsfunktion besonders komfortabel vom Fahrer eingeleitet werden kann.

Weitere Ausführungsformen ergeben sich aus den Ansprüchen sowie aus den anhand der Zeichnung näher erläuterten Ausführungsbeispielen. In der Zeichnung zeigen:
- Fig. 1: eine schematische Darstellung einer Feststellbremseinrichtung mit einer Noteinbremsfunktion gemäß eines Ausführungsbeispiels,
- Fig. 2: eine schematische Darstellung des Doppelabsperrventils und
- Fig. 3: eine schematische Darstellung einer Feststellbremseinrichtung mit einer Noteinbremsfunktion gemäß eines weiteren Ausführungsbeispiels.

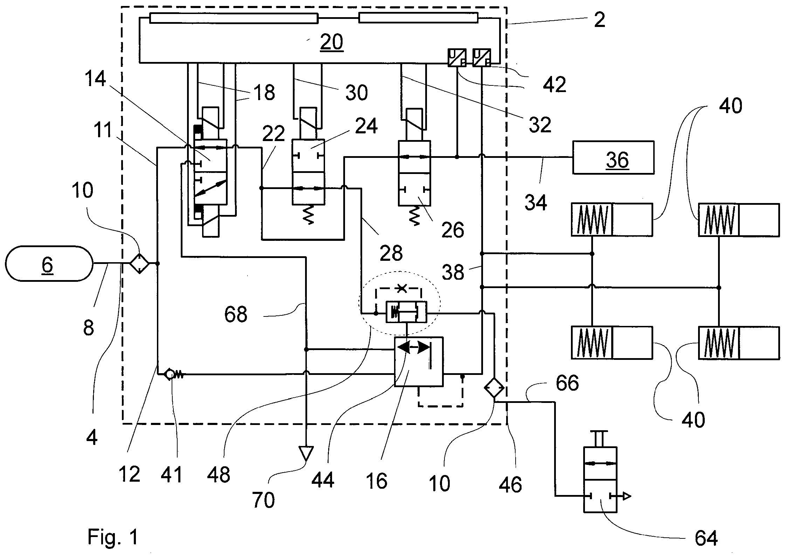

Fig. 1 zeigt eine schematische Darstellung einer erfindungsgemäßen Feststellbremseinrichtung einer Bremsanlage eines Fahrzeugs, insbesondere Nutzfahrzeugs. Bevorzugt handelt es sich bei der dargestellten Bremsanlage um eine druckluftbetriebene Bremsanlage mit einer elektropneumatischen Feststellbremseinrichtung. Demzufolge ist das verwendete Druckmittel Luft, die von einem hier nicht dargestellten Kompressor im Fahrzeug bereitgestellt und einem Feststellbremsmodul 2 übergeben wird.

Die nachfolgenden Erläuterungen können jedoch auch analog für eine Bremsanlage mit einer elektrohydraulischen Feststellbremseinrichtung umgesetzt werden. In diesem Fall ist das Druckmittel eine Flüssigkeit, bevorzugt ein Hydrauliköl.

Zum elektropneumatischen Aussteuern eines Feststelldrucks weist das erfindungsgemäße Feststellbremsmodul 2 einen Druckmitteleingang 4, insbesondere Belüftungseingang, auf, über den Druckluft aus einem Druckluftvorratsbehälter 6 über eine Druckluftleitung 8 dem Feststellbremsmodul 2 bereitgestellt wird. Durch ein Partikelfilter 10 führen Druckluftleitungen 11 und 12 diese Druckluft an ein erstes Magnetventil 14 und an ein luftmengenverstärkendes Ventil 16, auch Relaisventil genannt.

Das erste Magnetventil 14 ist als ein 3/2-Wege Bistabilmagnetventil ausgebildet und in zwei Schaltzuständen schaltbar. Zum Schalten des Magnetventils 14 wird dieses Magnetventil 14 über elektrische Leitungen 18 von einer elektronischen Steuereinheit 20 angesteuert. Ein derartiges Bistabilventil hat den Vorteil, dass es auch im Falle eines Stromausfalls in dem jeweiligen Schaltzustand verharrt, wodurch ein ungewolltes Einlegen oder Lösen der Feststellbremse verhindert wird.

In dem in Fig. 1 dargestellten Schaltzustand wird die Druckluftleitung 11 pneumatisch mit einer Druckluftleitung 22 verbunden, die einem zweiten Magnetventil 24 und einem dritten Magnetventil 26 Druckluft zuführt. Das zweite Magnetventil 24 ist ein 2/2-Wege Magnetventil, wobei der bestromte Schaltzustand gegen die Kraft einer Feder für die Dauer der Bestromung aufrechterhalten wird. Dazu ist das Magnetventil 24 über elektrische Leitungen 30 mit der elektronischen Steuereinheit 20 verbunden. Mittels des ersten Magnetventils 14 und des zweiten Magnetventils 24 kann ein Druck in einer Druckluftleitung 28 ausgesteuert werden.

Das dritte Magnetventil 26 ist ebenfalls ein 2/2-Wege Magnetventil, dessen bestromter Schaltzustand gegen die Kraft einer Feder für die Dauer der Bestromung aufrechterhalten wird, wobei das Magnetventil 26 über elektrische Leitungen 32 mit der elektronischen Steuereinheit 20 verbunden ist. Dieses Magnetventil 26 ist über eine weitere Druckmittelleitung 34 mit einem Anhängersteuerventil 36 pneumatisch verbunden. Dadurch ist die Feststellbremseinrichtung zum Einsatz in einem Zugfahrzeug geeignet, wobei an dem Zugfahrzeug ein Anhänger angekoppelt werden kann.

Alternativ zu dem hier gezeigten Ausführungsbeispiel kann das dritte Magnetventil 26 auch als 3/2-Wege Bistabilventil ausgebildet sein, wobei ein pneumatischer Anschluss des Ventils abgesperrt ist.

Mittels des Relaisventils 16 wird in einer weiteren Druckluftleitung 38 Druckluft mit einem ausgesteuerten Feststellbremsdruck mehreren Bremsaktuatoren 40 des Bremssystems bereitgestellt. Dazu ist das Relaisventil 16 über die Druckluftleitung 12 über ein Rückschlagventil 41 mit dem Druckluftvorratsbehälter 6 verbunden. Die ausgegebene Druckluft in der Druckluftleitung 38 entspricht einer Verstärkung des über einen Steuereingang 44 des Relaisventils 16 anliegenden Steuerdrucks und wird den Bremsaktuatoren 40 zugeführt.

Als Bremsaktuatoren 40 weist die Bremsanlage des Fahrzeugs Federspeicherbremszylinder oder kombinierte Federspeicher-/Membranzylinder auf, die mit dem am Feststellbremsmodul 2 anliegenden Vorratsdruck beaufschlagbar sind. Sind die Bremsaktuatoren 40 mit einem ausreichenden Druck beaufschlagt, ist die Feststellbremse gelöst. Andernfalls ist die Feststellbremse aufgrund der vorgespannten Feder in dem Federspeicherbremszylinder bzw. kombinierten Federspeicher-/Membranzylinder eingelegt. Eine Betätigung der Feststellbremse mittels der Feder der Federspeicherbremszylinder bzw. kombinierten Federspeicher-/Membranzylinder eignet sich besonders zum Abstellen des Fahrzeugs, da die Feststellbremse somit auch bei einem auftretenden Druckverlust allein aufgrund der Federkraft eingelegt bleibt.

Das erfindungsgemäße Feststellbremsmodul 2 weist ferner Drucksensiermittel 42 auf, mit denen der Druck innerhalb der Druckmittelleitungen 34, 38 ermittelbar ist. Bevorzugt ist der Druck nach Maßgabe des Drucksensiermittels 42 aussteuerbar. Dazu sind die Drucksensiermittel 42 bevorzugt mit der elektronischen Steuereinheit 20 zum Empfangen von Messwerten verbunden.

Um eine Feststellbremseinrichtung mit einer Noteinbremsfunktion zu schaffen, bei der ein komfortables Einlegen der Feststellbremsfunktion ermöglicht wird, weist das erfindungsgemäße Feststellbremsmodul 2 einen Druckmittelanschluss 46 und ein Doppelabsperrventil 48, ein sog. Select-Low-Ventil, auf.

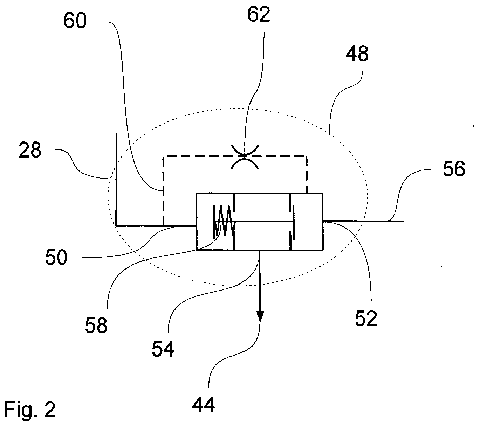

Fig. 2 zeigt eine schematische Darstellung des Doppelabsperrventils 48 gemäß Fig. 1, wobei das Doppelabsperrventil 48 zwei pneumatische Eingänge 50, 52 und einen pneumatischen Ausgang 54 aufweist. Bei dem Doppelabsperrventil 48 handelt es sich um ein sog. Select-Low-Ventil, bei dem stets der kleinere der an den Eingängen 50, 52 anliegenden Drücke über den Ausgang 54 ausgegeben wird.

Die Druckluftleitung 28 verbindet das zweite Magnetventil 24 pneumatisch mit dem ersten pneumatischen Eingang 50 des Doppelabsperrventils 48, eine weitere Druckluftleitung 56 verbindet den zweiten pneumatischen Eingang 52 des Doppelabsperrventils 48 mit dem Druckmittelanschluss 46 des Feststellbremsmodul 2 und der pneumatische Ausgang 54 des Doppelabsperrventils 48 ist mit dem Steuereingang 44 des Relaisventils 16 pneumatisch verbunden.

Bevorzugt weist das Doppelabsperrventil 48 ein Federelement 58 auf, mit dem das Doppelabsperrventil 48 zum Erzeugen einer bevorzugten Durchgangsrichtung der Druckluft vorspannbar ist. Das Doppelabsperrventil ist somit derart vorgespannt, dass das Doppelabsperrventil eine bevorzugte Durchgangsrichtung des Druckmittels innerhalb des Doppelabsperrventils aufweist.

Die bevorzugte Durchgangsrichtung liegt zwischen dem ersten pneumatischen Eingang 50 und dem pneumatischen Ausgang 54 und verbindet somit das zweite Magnetventil 24 mit dem Steuereingang 44 des Relaisventils 16. Diese Durchgangsrichtung entspricht dem störungsfreien Betrieb der Feststellbremseinrichtung, bei dem die Bremsaktuatoren 40 über die Magnetventile 14, 24 elektropneumatisch angesteuert werden.

Ferner weist das Doppelabsperrventil 48 bevorzugt einen Hilfsdrucksteuerkanal 60 mit einer Abdüsung 62 auf. Die Nennweite der Abdüsung 62 ist dabei derart dimensioniert, dass der über dem Hilfsdrucksteuerkanal 60 anliegende Druck zusammenbricht, wenn der Druckmittelanschluss 46 des Feststellbremsmoduls 2 entlüftet wird. Der Hilfsdrucksteuerkanal 60 dient vorteilhafterweise zum Befüllen der Druckmittelleitung 56 des Druckmittelanschlusses 46.

Das Federelement 58 und der Hilfsdrucksteuerkanal 60 erhöhen vorteilhafterweise die Funktionstüchtigkeit des Doppelabsperrventils 48, indem ein Festsitzen des Ventilkolbens vermieden wird.

Die Noteinbremsfunktion wird von einem Fahrer des Fahrzeugs durch Betätigung eines außerhalb des Feststellbremsmoduls 2 angeordneten, handbetätigbaren 2/2-Wege Ventil 64 eingeleitet. Dabei ist das 2/2-Wege Ventil 64 über eine Druckluftleitung 66 mit dem Druckmittelanschluss 46 des Feststellbremsmoduls 2 verbunden. Die Betätigung des externen Ventils 64 erfolgt bevorzugt von der Fahrerkabine aus und schaltet das Ventil 64 von einem Schaltzustand, bei dem die Druckluftleitung 66 abgesperrt ist, in einen anderen Schaltzustand, bei dem die Druckluftleitung 66 zur Atmosphäre hin entlüftet ist.

Wenn die Druckluft über die Druckluftleitung 66 entweicht, liegt an dem zweiten Eingang 52 des Doppelabsperrventils 48 folglich ein geringerer Druck als an dem ersten Eingang 50 an und das Doppelabsperrventil 48 öffnet die Verbindung zwischen dem zweiten Eingang 52 und dem Ausgang 54.

An dem Steuereingang 44 des Relaisventils 16 liegt nunmehr nur der Atmosphärendruck an und die Bremsaktuatoren 40 werden über das Relaisventil 16 entlüftet. Dazu ist das Relaisventil 16 über eine Druckluftleitung 68 mit dem Ausgang 70 des Feststellbremsmoduls 2 verbunden. Dieser Ausgang 70 entspricht bei einer elektropneumatischen Feststellbremseinrichtung der Entlüftung zur Atmosphäre hin und bei einer elektrohydraulischen Feststellbremseinrichtung einem angeschlossenen Tank zum Auffangen der Hydraulikflüssigkeit.

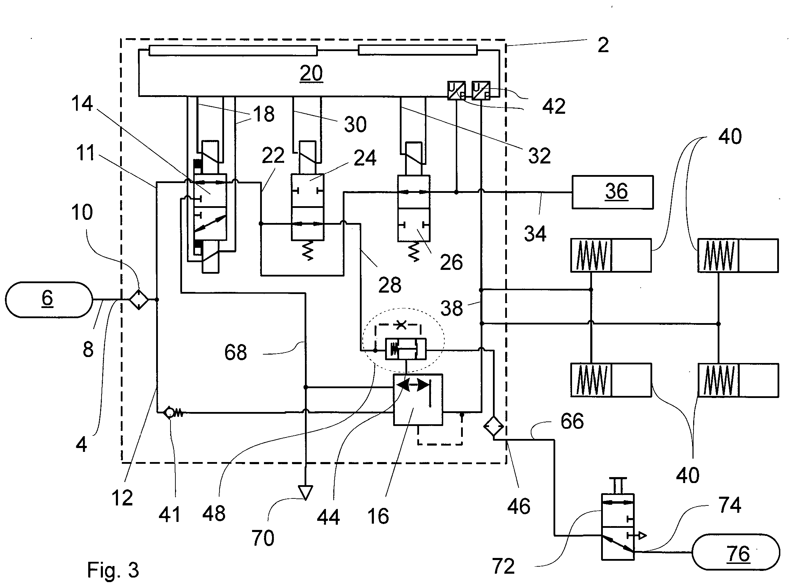

Fig. 3 zeigt eine schematische Darstellung einer Feststellbremseinrichtung mit einer Noteinbremsfunktion gemäß einem weiteren Ausführungsbeispiel, welche zu großen Teilen der Feststellbremseinrichtung gemäß Fig. 1 gleicht. Insofern bezeichnen gleiche Bezugsziffern auch gleiche Bauteile und es wird auf die entsprechenden obigen Ausführungen verwiesen.

Die beiden Ausführungsbeispiele gemäß Fig. 1 und Fig. 3 unterscheiden sich in dem am Druckmittelanschluss 46 angeschlossenen externen Ventil. So zeigt Fig. 3 die Verwendung eines 3/2-Wege Ventils 72, welches manuell zwischen zwei Schaltzuständen geschaltet werden kann. Bei einem ersten, hier dargestellten Schaltzustand des 3/2-Wege Ventils 72 ist die Druckluftleitung 66 über einen Anschluss 74 mit einem Vorratsdruckbehälter 76 verbunden. Der zweite Schaltzustand des 3/2-Wege Ventils 72 entlüftet die Druckluftleitung 66 zur Atmosphäre hin und legt somit über das Relaisventil 16 des Feststellbremsmoduls 2 die Feststellbremse ein.

Bei der Verwendung eines derartigen 3/2-Wege Ventils 72 ist jedoch zu beachten, dass bei einem Druckverlust im Vorratsdruckbehälter 76 eine ungewollte Einbremsung des Fahrzeugs über die Noteinbremsfunktion erfolgen könnte.

Sämtliche in der vorstehenden Beschreibung sowie in den Ansprüchen genannten Merkmale sind sowohl einzeln als auch in beliebiger Kombination mit den Merkmalen der unabhängigen Ansprüche kombinierbar. Der Schutzumfang der Erfindung wird dabei durch den Gegenstand der anhängenden Ansprüche eingeschränkt.

## Patentansprüche

1. Feststellbremsmodul einer Feststellbremseinrichtung mit einer Noteinbremsfunktion, mit dem eine Druckmittelbeaufschlagung mindestens eines Bremsaktuators (40) steuerbar ist, wobei das Feststellbremsmodul (2) eine elektronische Steuereinrichtung (20), mindestens ein von der elektronischen Steuereinrichtung betätigbares Magnetventil (14), ein druckmittelmengenverstärkendes Ventil (16) zur Druckmittelbeaufschlagung des mindestens einen Bremsaktuators (40) und mindestens einen Druckmitteleingang (4), über den dem Feststellbremsmodul (2) Druckmittel zuführbar ist, aufweist, **dadurch gekennzeichnet, dass**
das Feststellbremsmodul (2) ein Doppelabsperrventil (48) und einen Druckmittelanschluss (46) aufweist,
das Doppelabsperrventil (48) zwei Eingänge (50, 52) und einen Ausgang (54) aufweist und derart ausgebildet ist, dass derjenige Eingang (50, 52), an welchem der geringere Druck anliegt, mit dem Ausgang (54) des Doppelabsperrventils (48) verbunden ist, wobei der Ausgang (54) des Doppelabsperrventils (48) mit dem Steuereingang (44) des druckmittelmengenverstärkenden Ventils (16) verbunden ist, und
der Druckmittelanschluss (46) mit nur einem der zwei Eingänge (52) des Doppelabsperrventils (48) verbunden ist.

2. Feststellbremsmodul nach Anspruch 1,
**dadurch gekennzeichnet, dass**
über den Druckmittelanschluss (46) ein 2/2-Wege Ventil (64) über eine Druckmittelleitung (66) mit dem Feststellbremsmodul (2) verbunden ist.

3. Feststellbremsmodul nach Anspruch 1,
**dadurch gekennzeichnet, dass**
über den Druckmittelanschluss (46) ein 3/2-Wege Ventil (72) über eine Druckmittelleitung (66) mit dem Feststellbremsmodul (2) verbunden ist, wobei das 3/2-Wege Ventil (72) über einen Anschluss (74) mit einem Vorratsdruckbehälter (76) verbunden ist.

4. Feststellbremsmodul nach Anspruch 2 oder 3,
**dadurch gekennzeichnet, dass**
das über den Druckmittelanschluss (46) verbundene Ventil (64, 72) beabstandet von dem Feststellbremsmodul (2) angeordnet ist.

5. Feststellbremsmodul nach Anspruch 1,
**dadurch gekennzeichnet, dass**
über den Druckmittelanschluss (46) eine separate Ventillogik mit dem Feststellbremsmodul (2) verbunden ist.

6. Feststellbremsmodul nach einem der vorhergehenden Ansprüche,
**dadurch gekennzeichnet, dass**
das Doppelabsperrventil (48) ein Federelement (58) aufweist, welches derart vorgespannt ist, dass das Doppelabsperrventil (48) eine bevorzugte Durchgangsrichtung des Druckmittels innerhalb des Doppelabsperrventils (48) aufweist.

7. Feststellbremsmodul nach einem der vorhergehenden Ansprüche,
**dadurch gekennzeichnet, dass**
das Doppelabsperrventil (48) einen Hilfsdrucksteuerkanal (60) mit einer Abdüsung (62) aufweist, wobei die Nennweite der Abdüsung (62) derart bemessen ist, dass der an dem Hilfsdrucksteuerkanal (60) anliegende Druck abfällt für den Fall, dass der an dem Druckmittelanschluss (46) des Feststellbremsmoduls (2), welcher über einen der zwei Eingängen (50, 52) des Doppelabsperrventils (48) mit dem Steuereingang (44) des druckmittelmengenverstärkenden Ventils (16) verbunden ist, anliegende Druck abfällt.

8. Feststellbremsmodul nach einem der vorhergehenden Ansprüche,
**dadurch gekennzeichnet, dass**
der Druckmitteleingang (4) und/oder der Druckmittelanschluss (46) jeweils einen Partikelfilter (10) aufweisen.

9. Bremsanlage mit einer Feststellbremseinrichtung,
**gekennzeichnet durch**
mindestens ein Feststellbremsmodul (2) nach einem der Ansprüche 1 bis 8, wobei das Feststellbremsmodul (2) derart ausgebildet ist, dass es eine Noteinbremsfunktion der Feststellbremseinrichtung bereitstellt.

10. Fahrzeug,
**gekennzeichnet durch**
mindestens ein Feststellbremsmodul (2) nach einem der Ansprüche 1 bis 8 und/oder
mindestens eine Bremsanlage nach Anspruch 9.

11. Verfahren zum Betreiben einer Feststellbremseinrichtung mit einer Noteinbremsfunktion einer Druckmittelbetriebenen Bremsanlage eines Fahrzeugs mit einem Feststellbremsmodul (2) mit dem eine Druckmittelbeaufschlagung mindestens eines Bremsaktuators (40) steuerbar ist, wobei das Feststellbremsmodul (2) eine elektronische Steuereinrichtung (20), mindestens ein von der elektronischen Steuereinrichtung betätigbares Magnetventil (14), ein druckmittelmengenverstärkendes Ventil (16) zur Druckmittelbeaufschlagung des mindestens einen Bremsaktuators (40), mindestens einen Druckmitteleingang (4) über den dem Feststellbremsmodul (2) Druckmittel zuführbar ist, aufweist, wobei das Feststellbremsmodul (2) des Weiteren ein Doppelabsperrventil (48) und einen Druckmittelanschluss (46) aufweist, das Doppelabsperrventil (48) zwei Eingänge (50, 52) und einen Ausgang (54) aufweist wobei der Ausgang (54) des Doppelabsperrventils (48) mit dem Steuereingang (44) des druckmittelmengenverstärkenden Ventils (16) verbunden ist, und der Druckmittelanschluss (46) mit nur einem der zwei Eingänge (52) des Doppelabsperrventils (48) verbunden ist, **gekennzeichnet durch** folgende Schritte:
derjenige Eingang (50, 52) des Doppelabsperrventils (48), an welchem der geringere Druck anliegt, wird mit dem Ausgang (54) des Doppelabsperrventils (48) verbunden, so dass der geringere Druck ausgegeben wird und dieser Druck wird als Steuerdruck dem druckmittelmengenverstärkenden Ventil (16) zugeführt.

## Claims

1. Parking brake module of a parking brake device with an emergency braking function, by way of which parking brake module pressure medium loading of at least one brake actuator (40) can be controlled, the parking brake module (2) having an electronic control device (20), at least one solenoid valve (14) which can be actuated by the electronic control device, a valve (16) which boosts the pressure medium quantity for the pressure medium loading of the at least one brake actuator (40), and at least one pressure medium inlet (4), via which pressure medium can be fed to the parking brake module (2), **characterized in that** the parking brake module (2) has a double shut-off valve (48) and a pressure medium connector (46), the double shut-off valve (48) has two inlets (50, 52) and an outlet (54) and is configured in such a way that that inlet (50, 52), at which the lower pressure prevails, is connected to the outlet (54) of the double shut-off valve (48), the outlet (54) of the double shut-off valve (48) being connected to the control inlet (44) of the valve (16) which boosts the pressure medium quantity, and the pressure medium connector (46) is connected to only one of the two inlets (52) of the double shut-off valve (48).

2. Parking brake module according to Claim 1, **characterized in that** a 2/2-way valve (64) is connected via the pressure medium connector (46) to the parking brake module (2) via a pressure medium line (66).

3. Parking brake module according to Claim 1, **characterized in that** a 3/2-way valve (72) is connected via the pressure medium connector (46) to the parking brake module (2) via a pressure medium line (66), the 3/2-way valve (72) being connected via a connector (74) to a supply pressure reservoir (76).

4. Parking brake module according to Claim 2 or 3, **characterized in that** the valve (64, 72) which is connected via the pressure medium connector (46) is arranged spaced apart from the parking brake module (2).

5. Parking brake module according to Claim 1, **characterized in that** a separate valve logic circuit is connected via the pressure medium connector (46) to the parking brake module (2).

6. Parking brake module according to one of the preceding claims, **characterized in that** the double shut-off valve (48) has a spring element (58) which is prestressed in such a way that the double shut-off valve (48) has a preferred passage direction of the pressure medium within the double shut-off valve (48).

7. Parking brake module according to one of the preceding claims, **characterized in that** the double shut-off valve (48) has an auxiliary pressure control duct (60) with an outlet nozzle system (62), the nominal width of the outlet nozzle system (62) being dimensioned in such a way that the pressure which prevails at the auxiliary pressure control duct (60) drops for the case where the pressure drops which prevails at the pressure medium connector (46) of the parking brake module (2), which pressure medium connector (46) is connected via one of the two inlets (50, 52) of the double shut-off valve (48) to the control inlet (44) of the valve (16) which boosts the pressure medium quantity.

8. Parking brake module according to one of the preceding claims, **characterized in that** the pressure medium inlet (4) and/or the pressure medium connector (46) in each case have/has a particle filter (10).

9. Brake system with a parking brake device, **characterized by** at least one parking brake module (2) according to one of Claims 1 to 8, the parking brake module (2) being configured in such a way that it provides an emergency braking function of the parking brake device.

10. Vehicle, **characterized by** at least one parking brake module (2) according to one of Claims 1 to 8 and/or at least one brake system according to Claim 9.

11. Method for the operation of a parking brake device with an emergency braking function of a brake system, operated by pressure medium, of a vehicle with a parking brake module (2), by way of which pressure medium loading of at least one brake actuator (40) can be controlled, the parking brake module (2) having an electronic control device (20), at least one solenoid valve (14) which can be actuated by the electronic control device, a valve (16) which boosts the pressure medium quantity for pressure medium loading of the at least one brake actuator (40), at least one pressure medium inlet (4), via which pressure medium can be fed to the parking brake module (2), the parking brake module (2) having, furthermore, a double shut-off valve (48) and a pressure medium connector (46), the double shut-off valve (48) having two inlets (50, 52) and an outlet (54), the outlet (54) of the double shut-off valve (48) being connected to the control inlet (44) of the valve (16) which boosts the pressure medium quantity, and the pressure medium connector (46) being connected to merely one of the two inlets (52) of the double shut-off valve (48), **characterized by** the following steps:
that inlet (50, 52) of the double shut-off valve (48), at which the lower pressure prevails, is connected to the outlet (54) of the double shut-off valve (48), with the result that the lower pressure is output, and the said pressure is fed as control pressure to the valve (16) which boosts the pressure medium quantity.

## Revendications

1. Module de frein de stationnement pour un dispositif de frein de stationnement comprenant une fonction de freinage de secours, avec lequel une sollicitation par un fluide sous pression d'au moins un actionneur de frein (40) peut être commandée, le module de frein de stationnement (2) présentant un dispositif de commande électronique (20), au moins une électrovanne (14) pouvant être actionnée par le dispositif de commande électronique, une soupape augmentant la quantité de fluide sous pression (16) pour solliciter par fluide sous pression l'au moins un actionneur de frein (40) et au moins une entrée de fluide sous pression (4) par le biais de laquelle le module de frein de stationnement (2) peut être alimenté en fluide sous pression,
**caractérisé en ce que**
le module de frein de stationnement (2) présente un double clapet antiretour (48) et un raccord de fluide sous pression (46),
le double clapet antiretour (48) présente deux entrées (50, 52) et une sortie (54) et est réalisé de telle sorte que l'entrée (50, 52) au niveau de laquelle s'applique la plus faible pression soit raccordée à la sortie (54) du double clapet antiretour (48), la sortie (54) du double clapet antiretour (48) étant raccordée à l'entrée de commande (44) de la soupape augmentant la quantité de fluide sous pression (16), et
le raccord de fluide sous pression (46) étant raccordé à seulement l'une des deux entrées (52) du double clapet antiretour (48).

2. Module de frein de stationnement selon la revendication 1,
**caractérisé en ce**
**qu'**une soupape à 2/2 voies (64) est raccordée par le biais du raccord de fluide sous pression (46) au module de frein de stationnement (2) par le biais d'une conduite de fluide sous pression (66).

3. Module de frein de stationnement selon la revendication 1,
**caractérisé en ce**
**qu'**une soupape à 3/2 voies (72) est raccordée par le biais du raccord de fluide sous pression (46) au module de frein de stationnement (2) par le biais d'une conduite de fluide sous pression (66), la soupape à 3/2 voies (72) étant raccordée à un récipient sous pression de réserve (76) par le biais d'un raccord (74).

4. Module de frein de stationnement selon la revendication 2 ou 3,
**caractérisé en ce que**
la soupape (64, 72) raccordée par le biais du raccord de fluide sous pression (46) est disposée à distance du module de frein de stationnement (2) .

5. Module de frein de stationnement selon la revendication 1,
**caractérisé en ce**
**qu'**une logique de soupape séparée est raccordée au module de frein de stationnement (2) par le biais du raccord de fluide sous pression (46).

6. Module de frein de stationnement selon l'une quelconque des revendications précédentes,
**caractérisé en ce que**
le double clapet antiretour (48) présente un élément de ressort (58) qui est précontraint de telle sorte que le double clapet antiretour (48) présente une direction de passage préférentielle du fluide sous pression à l'intérieur du double clapet antiretour (48).

7. Module de frein de stationnement selon l'une quelconque des revendications précédentes,
**caractérisé en ce que** le double clapet antiretour (48) présente un canal de commande de pression auxiliaire (60) avec une buse d'évacuation (62), la largeur nominale de la buse d'évacuation (62) étant dimensionnée de telle sorte que la pression s'appliquant au niveau du canal de commande de pression auxiliaire (60) diminue au cas où la pression s'appliquant au niveau du raccord de fluide sous pression (46) du module de frein de stationnement (2), qui est raccordé par le biais de l'une des deux entrées (50, 52) du double clapet antiretour (48) à l'entrée de commande (44) de la soupape augmentant la quantité de fluide sous pression (16), diminue.

8. Module de frein de stationnement selon l'une quelconque des revendications précédentes,
**caractérisé en ce que**
l'entrée de fluide sous pression (4) et/ou le raccord de fluide sous pression (46) présentent chacun un filtre à particules (10).

9. Installation de freinage comprenant un dispositif de frein de stationnement,
**caractérisée par**
au moins un module de frein de stationnement (2) selon l'une quelconque des revendications 1 à 8, le module de frein de stationnement (2) étant réalisé de manière à fournir une fonction de freinage de secours du dispositif de frein de stationnement.

10. Véhicule,
**caractérisé par**
au moins un module de frein de stationnement (2) selon l'une quelconque des revendications 1 à 8 et/ou
au moins une installation de freinage selon la revendication 9.

11. Procédé pour faire fonctionner un dispositif de frein de stationnement comprenant une fonction de freinage de secours de l'installation de freinage fonctionnant avec un fluide sous pression d'un véhicule comprenant un module de frein de stationnement (2) avec lequel une sollicitation par un fluide sous pression d'au moins un actionneur de frein (40) peut être commandée, le module de frein de stationnement (2) présentant un dispositif de commande électronique (20), au moins une électrovanne (14) pouvant être actionnée par le dispositif de commande électronique, une soupape augmentant la quantité de fluide sous pression (16) pour solliciter par fluide sous pression l'au moins un actionneur de frein (40), au moins une entrée de fluide sous pression (4) par le biais de laquelle le module de frein de stationnement (2) peut être alimenté en fluide sous pression, le module de frein de stationnement (2) présentant en outre un double clapet antiretour (48) et un raccord de fluide sous pression (46), le double clapet antiretour (48) présentant deux entrées (50, 52) et une sortie (54), la sortie (54) du double clapet antiretour (48) étant raccordée à l'entrée de commande (44) de la soupape augmentant la quantité de fluide sous pression (16), et le raccord de fluide sous pression (46) étant raccordé à seulement l'une des deux entrées (52) du double clapet antiretour (48), **caractérisé par** les étapes suivantes :
l'entrée (50, 52) du double clapet antiretour (48) au niveau de laquelle s'applique la plus faible pression est raccordée à la sortie (54) du double clapet antiretour (48) de telle sorte que la plus faible pression soit émise et cette pression est acheminée en tant que pression de commande à la soupape augmentant la quantité de fluide sous pression (16).
